# EUROPEAN PATENT SPECIFICATION

(11) **EP 2 219 105 B1**
(45) Date of publication and mention of the grant of the patent: **13.05.2015**
(21) Application number: 09001955.5
(22) Date of filing: 12.02.2009
(51) Int. Cl.: G06F 3/048

(54) **Method for handling notifications and user equipment for carrying out the method**
Verfahren zur Handhabung von Benachrichtigungen und Benutzergerät zur Durchführung des Verfahrens
Procédé de traitement de notifications et équipement utilisateur pour effectuer le procédé

(43) Date of publication of application: 18.08.2010
(73) Proprietor: Vodafone Holding GmbH, 40213 Düsseldorf (DE)
(72) Inventor: Schlosser, Katharina, 40219 Düsseldorf (DE)
(74) Representative: Jostarndt, Hans-Dieter

(56) References cited:
- US-A1- 2008 150 907

## Description

### Technical Field

The present invention is directed to a mobile communication device with a graphical user interface. In particular, the present invention is directed to a mobile communication device according to the preamble of claim 1.

### Background of the invention

Today there is an increasing number of digital communication devices such as personal digital assistance (PDA), portable computers, mobile telephones, palmtop computers, etc.. Sometimes these devices are also equipped with cameras by taking pictures, as well as video and audio recordings. The features and capabilities of the devices lead to an increasing number of data files that may be exchanged between different devices and users by wireless or wired networks. As an example, a mobile telephone is no longer limited for receiving and making voice calls but it may take photographs, receive e-mails and SMS messages and voice messages. The variety of different kinds of communication increases the number of communication items significantly. This number of communication items is increased even more because one and the same communication item of the above mentioned types is frequently copied to a plurality of recipients. Because of the sheer quantity it becomes consequently more and more difficult for individuals to organize their communication items on a communication device especially if the communication device has only a small screen.

It is known to set up different kinds of directories in which the communication items are listed in a sequential order according to different sorting criteria such as the name of the sender, receiving time, sent time, subject, and the like. However, conventional sorting mechanisms still do not solve the issue completely and the presentation of a large number of communication items remains difficult to organize in this way. In general, it is very helpful for a user if he can link a specific information item within a certain context of other kinds of information.

Several attempts have been made to help the user to organize communication items in a more efficient way.

US 5898435 describes an image controlling device and a oorresponding method. According to the known device a menu is constructed by arranging a plurality of menu items three dimensionally along a single cylinder. A portion of these menu items is displayed in such a manner that viewing is performed from the centre of the cylinder outwards. However, there remains a desire for the user for more support in organizing his communication items.

When today a mobile telephone is released on the market its graphical user interface I.e. the software part of the telephone user interface is a fixed component usually designed by a manufacturer and/or the network provider and programmed in the manufacturing environment of the mobile telephone. Every mobile telephone user interface is inevitably a compromise given the fact it needs to serve a huge audience with very different needs. This means menus are filled with applications which some users never use, the whole display is showing inappropriate elements and for specific information the user needs to open a browser to find this information. Dependant on how many submenus the user has to open this may be a very inefficient process in some cases.

Such menus may differ very greatly in terms of their structure, the number of parameters displayed and the difficulty of using them. The different desires, demands and capabilities of the users mean that there is generally not a single menu which meets the demands of all potential users. In practice, by way of example, a particular menu may be far too complicated and incomprehensible for a first, technically inexperienced user, yet may still be too simple for a second, technically experienced user, because the latter desires further refined setting options or would like to use further services offered.

Even for a single person the most frequently used functionalities may vary throughout a day and a week depending on the context of the daily life of the user. At work, usually calling numbers or caller lists as well as business e-mail functionalities are most important. At home, the same user may never access his business e-mail but rather use a camera and a photo gallery to show photos to visitors. At leisure times, for example on a festival the most important things to this user are latest updates about the festival and notifications when a favourite band starts playing. During holidays a personal blog may be the most frequently accessed service.

The graphical user interface of today's mobile telephones can only be adapted to a very little extent to fit to the personal context of the user let alone to a varying context. At most the user has the possibility in some cases to make some accommodations. E.g. he may configure some aspects of the graphical user interface such as the language and the date format. He may also change the look and feel of the graphical user interface by selecting a template or by "skinning" the mobile telephone, i.e. changing the appearance of elements shown on the display. In some cases, the user may also install additional applications on the telephone.

From US 2005/0289227 A1 a method for editing a new interface of a portable device by using a browser is known. According to the known method a new interface of the portable device is edited with texts and graphics provided on a website associated with a server. The user of the portable device connects to the internet and logs in to a website associated with a server. On the server he may edit text or graphs a window or a picture frame of a new user interface. After the editing is finished the user downloads the information associated with the new user interface into a specific folder of the portable electronic device to replace the original graphical user interface of the device. In this way a personal style of the user interface can be created.

US 2008150907 (A1) discloses a touch screen-enabled mobile terminal and a display method the mobile terminal. The function display method includes selecting a menu of the mobile terminal; and displaying a user interface window corresponding to the selected menu on a touch screen. As a result, the user can use various functions of the mobile terminal through a dual display feature. E.g. for message handling a list of messages is shown on a display. A touch screen displays of a selected message as well as a user interface window having message handling keys such as "reply", "delete", "forward", etc.

### Brief description of the invention

The present invention proposes a concept for handling notifications by using a user equipment, which is capable of receiving the notifications, wherein the user equipment is protected against an unintended usage, and wherein the user equipment contains a graphical user interface.

As defined in claim 1, in a first aspect the invention provides a method for handling notifications by using a user equipment, which is capable of receiving the notifications, wherein the user equipment is protected by locking against an unintended usage, wherein the user equipment contains a graphical user interface with a touch screen, wherein the user interface comprises at least one first area and at least one second area; and wherein the method comprises the following steps:
displaying a received notification in the first area;
displaying a handling menu in the second area;
activating the handling menu if a user activates the handling menu by touching a first graphical element in the handling menu; and
unlocking and carrying out an action if the user maintains the touch of the first graphical element and moves it onto a second graphical element comprised in the handling menu.

According to one embodiment of the invention an unlock device to open a notification is carried out in a manner, which allows an efficient and fast handling of a user selection concerning the handling of the notification.

The notification may comprise a different type of communication and/or information elements, as for example messages.

According to one embodiment of the invention, at least one graphical element is proposed to facilitate the handling of the notification.

The graphical element is preferably a definable area, for example an area of the display of the communication device. This area has a selectable extension, shape and/or structure. It is for example a button.

According to one embodiment of the invention, the graphical area comprises an icon.

According to another embodiment of the invention, the graphical area comprises and icon and a label.

According to a further embodiment of the invention, the icon is placed next to the label. According to a further embodiment of the mobile communication device the graphical element is an icon.

Linking the communication item activation data is valuable contextual information for the user to support his memory when he tries to remember a situation or to find a specific data item.

According to one embodiment of the invention, the method further comprises a step of associating a communication item with the data item.

According to one embodiment the method further comprises the step of displaying a context menu in conjunction with the graphical elements. A context menu is an efficient way to communicate activation data to the user.

According to an embodiment of the invention, the graphical user interface comprises a touch screen with a first area and a second area.

According to one embodiment of the invention, in the first area at least one part of the notification is displayed.

According to a further embodiment of the invention the handling of the notification comprises at least one of the following actions: read the notifications; close the notification; and/or dismiss the notification.

According to a further embodiment of the invention at least one handling menu is displayed as a slider in a sliding element.

According to a further embodiment of the invention the sliding element is an example of a handling menu according to the invention.

According to a further aspect of the invention a sliding of the slider activates the action and initiates that the action is carried out.

According to yet a further aspect of the invention the graphical user interface contains at least two different handling menus, wherein the different handling menus relate to different actions.

According to a further aspect of the invention the different handling menus are displayed in different areas of the graphical user element.

The invention furthermore relates to a user equipment with a processing means which is capable of carrying out the method as described in the application.

According to a further embodiment of the invention the selection of the graphical element occurs through a flick action.

According to another aspect of the invention the selection of the graphical element occurs through panning.

According to a further aspect the invention suggests a mobile communication device comprising a radio interface, an input unit, a display, and a processing means, wherein the processing means is arranged to receive a communication item, to associate the communication item with a graphical element and to control the display such that a context menu displayed on the display. The processing means places the graphical element on the context menu to allow a user a selection of one or more graphical elements displayed within the context menu.

The invention furthermore relates to a mobile communication device with processing means, which are capable of carrying out methods and/or procedures described within the context of the current application.

Further features and advantages will become apparent when reading the detailed description appended with drawings.

### Short description of the drawings

In the drawing exemplary embodiments of the invention are illustrated. It shows:
- Figure 1: a top view of the mobile communication device according to the invention;
- Figure 2: a schematic block diagram of the communication device;
- Figures 3a to 3d: top views of the communication device in different steps of selecting graphical elements;
- Figures 4a to 4b: top views of the communication device in different steps of selecting graphical elements;
- Figures 5a to 5e: top views of a graphical user interface of the communication device in different steps of selecting graphical elements;
- Figures 6a to 6e: top views of the communication device in different steps of selecting graphical elements.
- Figures 7a to 7e: top views of a part of the graphical user interface in different steps of selecting graphical elements; and
- Figures 8a to 8e: top views of the graphical user interface in different steps of selecting graphical elements.

Similar or identical features and elements are labeled with the same reference numbers in the drawings.

### Detailed descrlption

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternative falling within the scope of the invention as defined by the following appended claims.

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

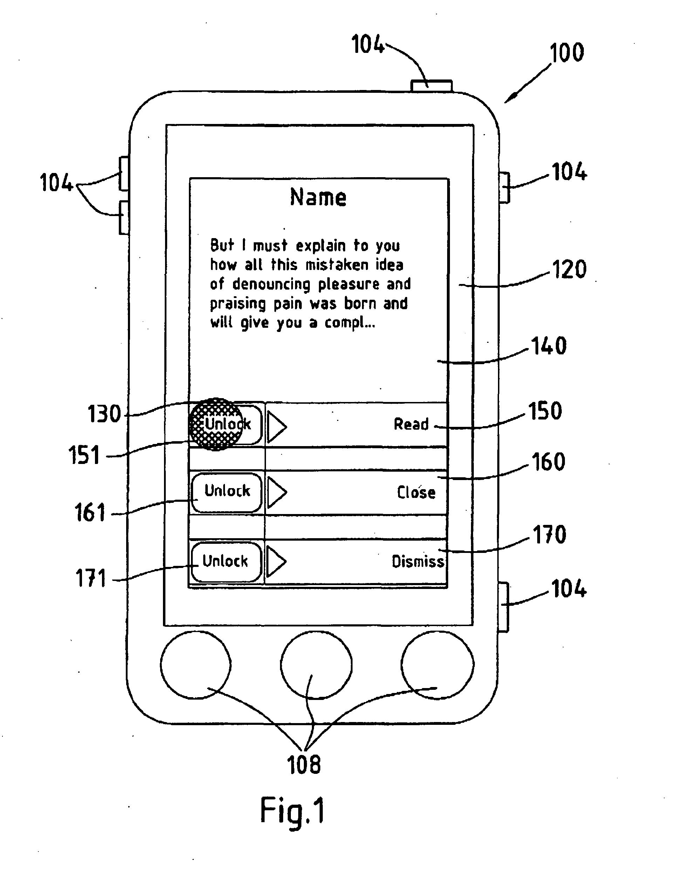

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below. Figure 1 shows a mobile communication device 100 according to the present invention. For example the mobile communication device is a mobile phone, a PDA (personal digital assistant) or the like, which is connected to a wireless public land mobile network (PLMN). The PLMN is a wireless telecommunication network according to GSM standard or according to the UMTS standard for example. The user of the communication device 100 can set up a connection to other communication devices through the network.

For the sake of the simplicity the present invention will be described in the following with reference to a PDA having a relatively large screen 101 covering a major part of the top surface 102 of the housing 103 of the mobile communication device. However, the present invention shall not be limited to PDAs.

On the periphery of the housing 103 there are buttons 104 provided enabling a user to control functionalities of the communication device 100. In addition to that, there are softkeys forming e command bar 105 and a scrollbar 106 available for the user for further control functionalities. In its main portion the screen 101 displays an at least first area 140 and one or more second areas 150; 160; 170.

At least one of the second areas 150; 160; 170 contains a handling method.

Finally, there are three hard keys 108 provided in the lower part of the top surface 102 of the housing 103.

The term "communication item" shall have a broad meaning in relation to the present invention. On the one hand it includes e-mail, voice, and SMS messages and the like but also contacts with other people and web sites of service providers. On the other hand also media files like pieces of music, video clips or pictures shall be comprised by the meaning of communication item. However, technically speaking a contact or a communication item is just a data item.

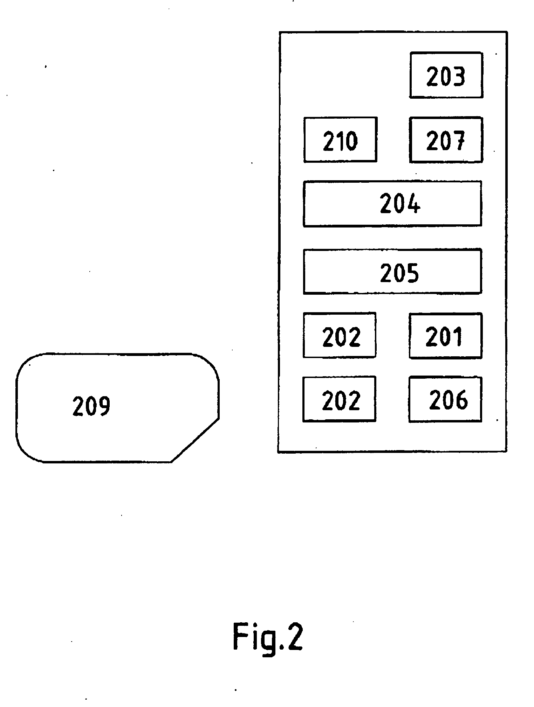

Figure 2 shows a schematic block diagram of the mobile communication device 100. The mobile communication device 100 comprises a mobile terminal 200 including a main processor 201 for controlling the operation of the mobile terminal 200. A memory 202 is coupled to the main processor 201 for storing data and applications that can be run on the main processor 201. Furthermore, the mobile terminal 200 comprises one or more communication interfaces. Particularly, the mobile terminal 200 provides a radio interface 203 for connecting the mobile terminal 200 wirelessly to a mobile communication network such as the PLMN mentioned above.

For capturing acoustic signals, particularly for capturing speech from the user of the mobile terminal 200, the mobile terminal 200 comprises a microphone 206. For outputting acoustic signals, the mobile terminal 200 comprises a loudspeaker 207. Moreover, the mobile terminal 200 comprises the screen 101, e.g. a liquid crystal display (LCD) 204. An input unit 205 interfaces the buttons 104, the command bar 105 and the hard keys 108.

By means of a card reader unit 208, the mobile terminal 200 can be connected to a subscriber identity module (SIM card) 209 to form the mobile communication device 100. The subscriber identity module 209 is a so-called smart card, which can be inserted into a card receptacle of the mobile terminal 200 that holds the card in a position, in which its contact elements are connected to corresponding contact elements of the card reader unit 208 of the mobile terminal 200. The card receptacle and the card reader unit 208 are usually arranged within a battery compartment of the mobile terminal 200, which is accessible by the mobile user.

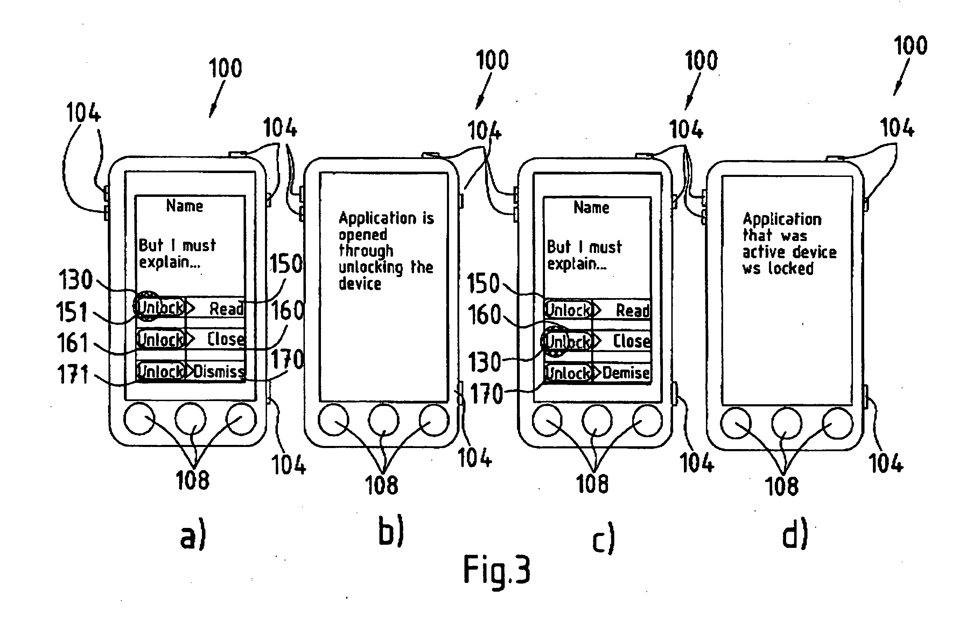

The subscriber identity module 209 may be configured as a subscriber identity module (SIM) according to the GSM standard or as a universal subscriber identity module (USIM) according to the UMTS standard, for example. Finally, the mobile terminal 200 is equipped with a GPS module 210 allowing to determine the location of the mobile terminal 200. In the memory 202 maps are stored such that the communication device 100 can indicate the present location of the device of the screen 101. The functionality of the GPS module 210 provides the opportunity to support the user with additional contextual information related to the received communication items as will be described in the following in connection with figures 3a to 3d showing different kinds of views or representations of the communication items 107 on the screen 101. The main processor 210 allows to display a plurality of graphical elements in a context menu on the display 204.

### Fig. 3

Fig. 3 consists of four parts, fig. 3a, 3b, 3c and 3d, which show a sequence of different states of a graphical user interface, especially a graphical user interface of a mobile user equipment as for example a mobile cellular phone.

The graphical user interface has a functionality, as it has been described in the other parts of this application, especially in the detailed description, for example with reference to figure 1.

The communication device shown in figures 3a, 3c and 3d contain a housing 103. On the periphery of the housing 103 there are buttons 104 provided enabling a user to control functionalities of the communication device 100. In addition to that, there are softkeys forming a command bar 105 and a scrollber 106 available for the user for further control functionalities.

The graphical user interface comprises a first area 114 and at least one second area 150, 160, 170.

The at least one second area 150, 160, 170 each contain at least one graphical element 151, 161, 171, which allow an activation.

The sequence of different states of the graphical elements is described afterwards.

A whole screen of the user equipment 100 remains dimmed. A notification is displayed in a first area, for example in the upper middle part of the screen, preferably just below a status bar.

Handling menus which operate as unlock modules occupy a different part of the screen, for example its lower part.

The unlock modules are in example of handling menus.

A different kind of user interactions are possible. For example a user slides a button 151 of the unlock module up to read the notification.

An application is opened through unlocking the device.

Fig. 3 shows a screen description, wherein the whole screen remains dimmed.

Fig. 3b shows a screen description, wherein the application is opened through unlocking the device.

After the application is opened the user slides the graphical element 161 with a tap 130 towards the close command to close the notification.

According to one embodiment of the invention, an incoming notification will be available for a certain period of time, preferably a few seconds, especially between 5 and 60 seconds, preferably around 20 seconds.

A user touches the graphical element 161. The area, where the touch of the user occurs is afterwards called a marked area 130. It is for example a tap.

An operating system of the mobile user equipment evaluates the existence of the touch of the user and relates the marked area 130 with at least one graphical element 161.

An operating system of the mobile user equipment detects the touch and relates it to at least one corresponding graphical element 161.

To inform the user about a detection of the selection of the at least one graphical element 161, the operating system initiates a response, which informs the user about the detection of the selection.

The operating system, especially the operating system of the mobile user equipment initiates a system response.

The system response is for example a visual feedback or an haptic feedback. In the case of an haptic feedback the user feels for example a turn of a cube representing an area 161of the graphical element 160.

The corresponding screen description / reference: this button is on (active).

The system evaluates, if an user interaction occurs. In the case, that the user taps the graphical element 160 or at least a part 161 of the graphical element, the system generates a response, for e.g. a visual feedback: animated status change between on and off clockwise. Haptic feedback: the user feels e.g. cube turn and the edge of the cube turn over auditory feedback: tbd.

It is within the scope of the invention to integrate means for informing the user about the selection and a possibility to maintain the selection and by this initiate an action related to activation data corresponding to the selected graphical element 123.

The operating system of the mobile user equipments evaluates, if a selection of the graphical element is maintained.

In the case, that the user does not maintain the selection of the graphical element it is alternatively and/or furthermore within the scope of the invention, that the communication device returns to the state beforehand described according to figure 3a; that means before the described starting process of the procedure.

In the case, that the selection of the graphical element Is maintained during the display of the second state of the graphical element and/or the part of the graphical element an action based on the activation data related to the selected graphical element is carried out.

According to an embodiment of the invention a system responds with regard to a selection of the user is initiated.

Examples for the system response are a visual feedback, as for e.g. the predescribed change of the state of the icon and/or additional features, as for e.g. an animated status.

For those skilled in the art, it is possible to implement a different animated status changes, for e.g. clockwise status change between on and off.

According to one embodiment of the invention, items (icons) and have a transition animation with a rotation and/or a movement in directions different from each other.

Additionally it is possible to integrate an haptic feedback. In the case of an haptic feedback, the user feels for e.g. a cube turn of the icon and the edge of the cube turn over.

Additionally and/or alternatively an auditory feedback may be given.

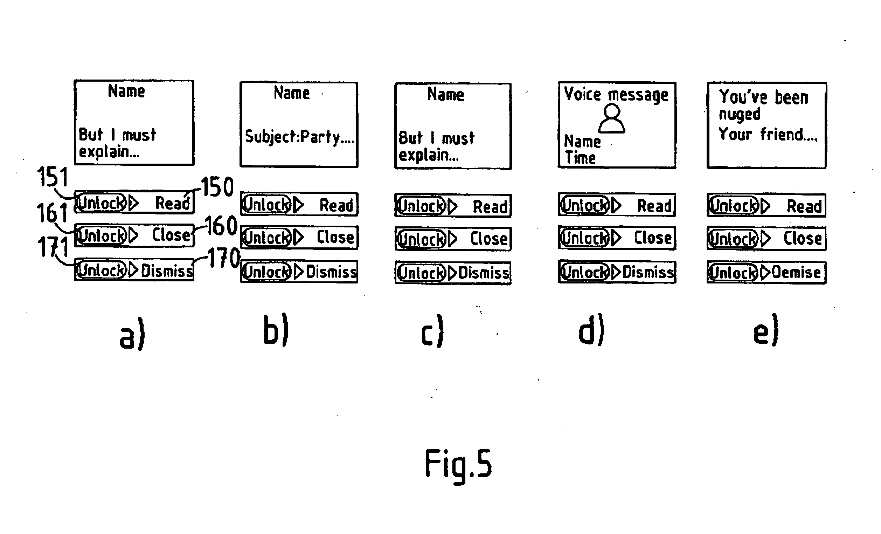

Fig. 5 shows a screen, which remains dimmed and wherein the notification occupies once again the upper middle part of the screen just below the status bar. The unlock modules 150; 160; 110 which are examples of handling menus according to the invention occupy the lower part of the screen.

As described in Fig. 5a the user slides the button 171 downwards to dismiss the message.

The incoming notification is also in this step of the handling visible for a certain period of time, preferably to the time periods described above.

The corresponding screen shows as described according to Fig. 5c, that the application was active when the device was locked. In this case the notification is not added to a multitaskbar.

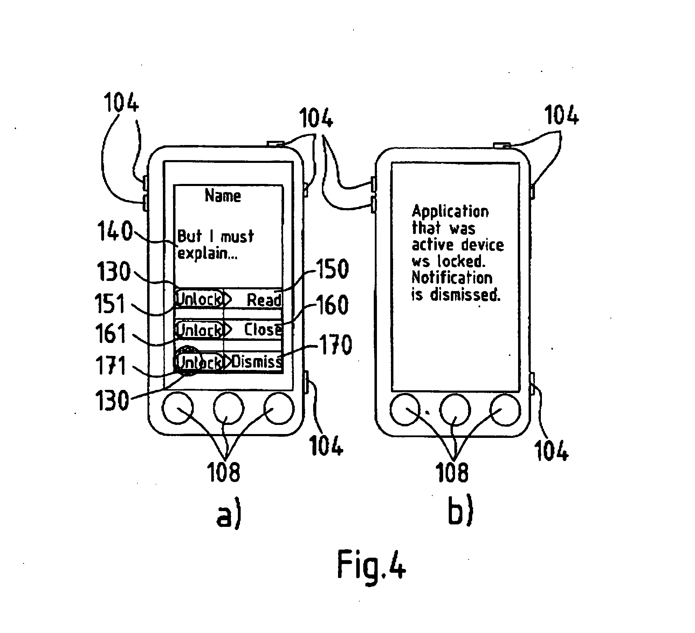

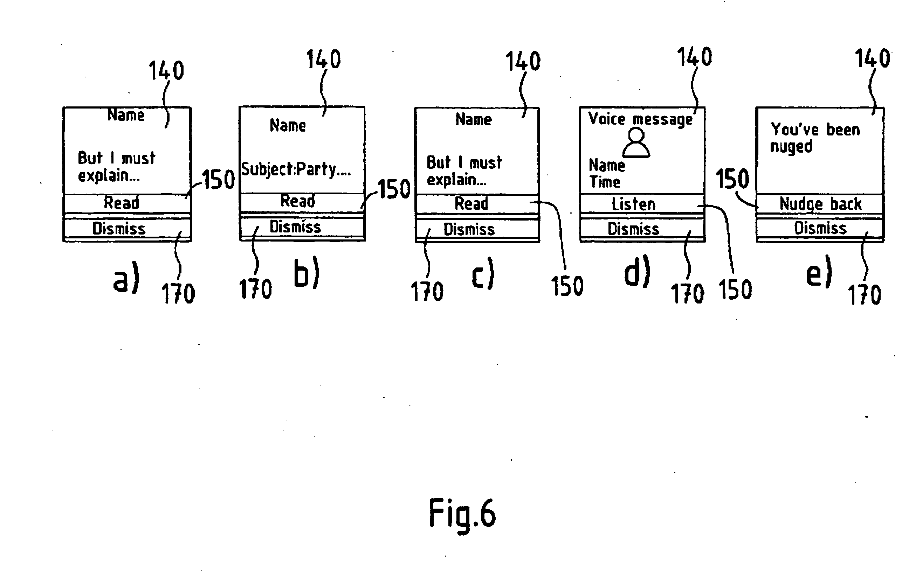

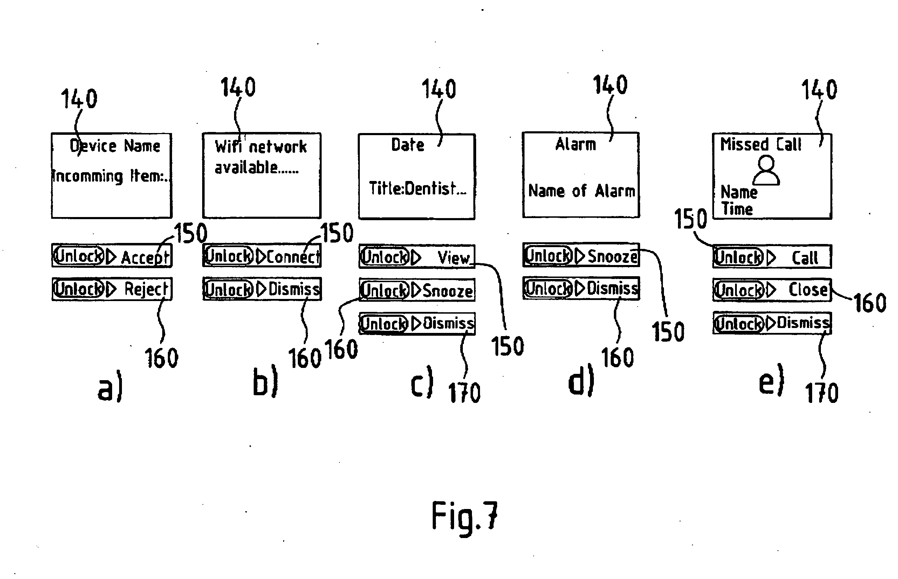

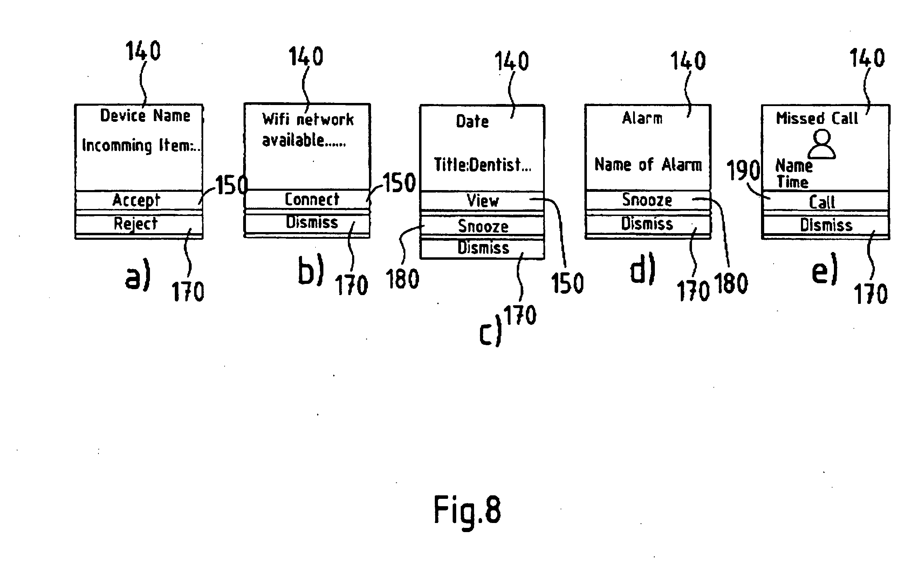

The principle described according to figures 1, 2, 3 and 4 also applies the following figures 5, 6, 7 and 8.

These figures show, that also other notifications may be handled within the scope of the invention.

Example of these notifications are voice messages, status information as for example availability information about a network, for example a wife network or a mobile communication network, as UMTS or GSM. Furthermore, alarms or information relating to reminders may be displayed.

The display occurs in the first area 140 of the graphical user interface.

It is within of the scope of the invention, that in the first area 140 further information is displayed, for example relating to a name of a sender of an information, a title of the information or even more complex information, as for example an icon or a photo representing a picture of a sender of the notification, which is for example an e-mail, a voice message or other types of messages.

The implementation of the invention described with regard to the figures may be carried out by implementing one or more rules, especially a set of rules.

The set of rules may apply to each of the implementations described in the figures, wherein it is obvious for those skilled in the art, that the different aspects described in different figures may be combined towards different implementations.

Therefore, the invention comprises implementations which contain a combination of elements described according to different figures.

The following rules especially apply to figures 5, 6, 7 and 8, however they may also apply to the preceding figures.

The rules preferably relate to each incoming notification, however it is also possible to implement a certain filter, so that these rules only relate to certain types of notifications.

According to one embodiment of the invention, it is differentiated between a locked state of the user equipment and an unlocked state of the user equipment.

In the locked state the whole screen remains dimmed. In the unlocked state the whole screen remains dimmed except for a status bar.

In both cases the notification occupies a certain part of the screen, preferably the upper middle part of the screen - just below the status bar, respectively the position in which the status bar would be displayed.

In the locked state of the user equipment the unlock module occupies the lower part of the screen.

In the locked state a cover flow for covering the display appears after another incoming notification.

In the unlocked state different buttons, for example "cancel" and "read" will be applied.

The invention however includes, that in the unlocked state further command buttons and other implementations handling menus are visible at the surface of the graphical user equipment.

The present invention enables a user to organize data items and to select activities in a time and resource efficient manner.

Since the user makes a selection, features are implemented to inform him about the selection and to ensure, that an activation is carried out in the case, that the selection is maintained.

The invention thus implements a high security against undesired, incidentally occurring activations in combinations with a quick selection and activation of desired actions.

### List of reference numerals

- 100: communication device
- 101: screen
- 102: top surface
- 103: housing
- 104: buttons
- 105: command bar
- 108: hard key
- 130: marked area
- 140: first area of a graphical user interface
- 150: second area of the graphical user equipment
- 160: second area of the graphical user equipment
- 170: second area of the graphical user equipment
- 151: a graphical element
- 161: a graphical element
- 171: a graphical element
- 201: main processor
- 202: memory
- 203: radio interface
- 204: LCD display
- 205: input unit
- 206: microphone
- 207: loud speaker
- 208: card reader
- 209: SIM card
- 210: GPS module

## Claims

1. Method for handling notifications by using a user equipment (100), which is capable of receiving the notifications, wherein the user equipment (100) is protected by locking against an unintended usage, wherein the user equipment (100) contains a graphical user interface with a touch screen, wherein the user interface comprises at least one first area (140) and at least one second area (150; 160; 170); and wherein the method is **characterised by** the following steps:
displaying a received notification in the first area (140);
displaying a handling menu in the second area (150; 160; 170);
activating the handling menu if a user activates the handling menu by touching a first graphical element (151, 161, 171) in the handling menu; and
unlocking the user equipment (100) and carrying out an action if the user maintains the touch on the first graphical element and moves said element onto a second graphical element comprised in the handling menu (150; 160; 170).

2. The method according to claim 1,
**characterized in, that**
in the first area (140) at least a part of the notification is displayed.

3. The method according to any of the claims 1 or 2,
**characterized in, that**
the handling of the notification comprises at least one of the following actions:
- reading the notification;
- closing the notification;
- dismissing the notification.

4. The method according to any of the preceding claims,
**characterized in, that**
the first graphical element is displayed as a slider (151; 161; 171) in a sliding element.

5. The method according to claim 4,
**characterized in, that**
a sliding of the slider (151; 161; 171) activates the action and initiates that the action is carried out.

6. The method according to any of the preceding claims,
**characterized in, that**
the graphical user interface contains at least two different handling menus (150; 160; 170), wherein the different handling menus (150; 160; 170) relate to different actions.

7. The method according to claim 6,
**characterized in, that**
the different handling menus (150; 160; 170) are displayed in different areas of the graphical user element.

8. The method according to any of the preceding claims, wherein the method comprises the following steps:
- generating one first graphical element (151; 161; 171) for each handling option relating to the received notification;
- evaluating if a selection of at least one first graphical element (151; 161; 171) has occurred; and
carrying out an action based on the activation data related to the selected first_graphical element (151; 161; 171).

9. User equipment (100) with an input unit (205), a display (101, 204), and a processing means (201) wherein the processing means is arranged to control the display (101, 204) such that a first area (140) and at least one second area (150; 160; 170) are displayed on the display (101, 204), and wherein the processing means (201) is capable of carrying out the method according to any of the preceding claims.

## Patentansprüche

1. Verfahren zum Behandeln von Benachrichtigungen unter Verwendung eines Teilnehmergeräts (100), das die Benachrichtigungen empfangen kann, wobei das Teilnehmergerät (100) durch Verriegelung vor einer unbeabsichtigten Nutzung geschützt ist, wobei das Teilnehmergerät (100) eine graphische Nutzerschnittstelle mit einem Touchscreen enthält, wobei die Nutzerschnittstelle wenigstens einen ersten Bereich (140) und wenigstens einen zweiten Bereich (150; 160; 170) umfasst; und wobei das Verfahren durch die folgenden Schritte gekennzeichnet ist:
Anzeigen einer empfangenen Benachrichtigung in dem ersten Bereich (140);
Anzeigen eines Behandlungsmenüs in dem zweiten Bereich (150; 160; 170);
Aktivieren des Behandlungsmenüs, falls ein Nutzer das Behandlungsmenü durch Berühren eines ersten graphischen Elements (151, 161, 171) in dem Behandlungsmenü aktiviert; und
Entriegeln des Teilnehmergeräts (100) und Ausführen einer Aktion, falls der Nutzer die Berührung an dem ersten graphischen Element aufrechterhält und das Element auf ein in dem Behandlungsmenü (150; 160; 170) enthaltenes zweites graphisches Element verschiebt.

2. Verfahren nach Anspruch 1,
**dadurch gekennzeichnet, dass**
wenigstens ein Teil der Benachrichtigung in dem ersten Bereich (140) angezeigt wird.

3. Verfahren nach einem der Ansprüche 1 oder 2,
**dadurch gekennzeichnet, dass**
die Behandlung der Benachrichtigung wenigstens eine der folgenden Aktionen umfasst:
- Lesen der Benachrichtigung;
- Schließen der Benachrichtigung;
- Verwerfen der Benachrichtigung.

4. Verfahren nach einem der vorhergehenden Ansprüche,
**dadurch gekennzeichnet, dass**
das erste graphische Element als ein Schieberegler (151; 161; 171) in einem Schiebeelement angezeigt wird.

5. Verfahren nach Anspruch 4,
**dadurch gekennzeichnet, dass**
ein Schieben des Schiebereglers (151; 161; 171) die Aktion aktiviert und initiiert, dass die Aktion ausgeführt wird.

6. Verfahren nach einem der vorhergehenden Ansprüche,
**dadurch gekennzeichnet, dass**
die graphische Nutzerschnittstelle wenigstens zwei unterschiedliche Behandlungsmenüs (150; 160; 170) enthält, wobei sich die unterschiedlichen Behandlungsmenüs (150; 160; 170) auf unterschiedliche Aktionen beziehen.

7. Verfahren nach Anspruch 6,
**dadurch gekennzeichnet, dass**
die unterschiedlichen Behandlungsmenüs (150; 160; 170) in unterschiedlichen Bereichen des graphischen Nutzerelements angezeigt werden.

8. Verfahren nach einem der vorhergehenden Ansprüche, wobei das Verfahren die folgenden Schritte umfasst:
- Erzeugen eines ersten graphischen Elements (151; 161; 171), jeweils zum Behandeln einer Option in Bezug auf die empfangene Benachrichtigung;
- Auswerten, ob eine Auswahl wenigstens eines ersten graphischen Elements (151; 161; 171) stattgefunden hat; und
- Ausführen einer Aktion auf der Grundlage der Aktivierungsdaten in Bezug auf das ausgewählte erste graphische Element (151; 161; 171).

9. Teilnehmergerät (100) mit einer Eingabeeinheit (205), einer Anzeige (101, 204) und einem Verarbeitungsmittel (201), wobei das Verarbeitungsmittel dafür ausgelegt ist, die Anzeige (101, 204) in der Weise zu steuern, dass auf der Anzeige (101, 204) ein erster Bereich (140) und wenigstens ein zweiter Bereich (150; 160; 170) angezeigt werden, und wobei das Verarbeitungsmittel (201) das Verfahren nach einem der vorhergehenden Ansprüche ausführen kann.

## Revendications

1. Méthode de gestion des notifications à l'aide d'un équipement destiné à l'utilisateur (100), capable de recevoir des notifications et protégé par verrouillage contre toute utilisation inappropriée, qui contient une interface utilisateur (100) graphique équipée d'un écran tactile et comporte au moins un premier espace (140) et au moins un second espace (150 ; 160 ; 170). Cette méthode se **caractérise par** les étapes suivantes :
affichage d'une notification reçue dans le premier espace (140) ;
affichage d'un menu de gestion dans le deuxième espace (150 ; 160 ; 170) ;
activation du menu de gestion lorsqu'un utilisateur active le menu de gestion en effleurant un premier élément graphique (151,161,171) du menu de gestion ; et déverrouillage de l'équipement destiné à l'utilisateur (100) et exécution d'une action lorsque l'utilisateur maintient le contact sur le premier élément graphique et déplace ledit élément sur un deuxième élément graphique compris dans le menu de gestion (150; 160; 170).

2. Selon la revendication 1, la méthode
se **caractérise par le fait que**
dans le premier espace (140), au moins une partie de la notification est affichée.

3. Selon la revendication 1 ou 2, la méthode
se **caractérise par le fait que**
la gestion de la notification comporte au moins l'une des actions suivantes :
- lecture de la notification,
- fermeture de la notification ;
- rejet de la notification.

4. Selon l'une ou l'autre des revendications précédentes, la méthode
se **caractérise par le fait que**
le premier élément graphique est affiché sous forme de curseur (151 ; 161 ; 171) dans un élément coulissant.

5. Selon la revendication 4, la méthode
se **caractérise par le fait que**
le mouvement du curseur (151 ; 161 ; 171) déclenche l'action et suit son exécution.

6. Selon l'une ou l'autre des revendications précédentes, la méthode
se **caractérise par le fait que**
l'interface utilisateur graphique contient au moins deux menus de gestion différents (150 ; 160 ; 170), qui se rapportent à des actions différentes.

7. Selon la revendication 6, la méthode
se **caractérise par le fait que**
les différents menus de gestion (150 ; 160 ; 170) sont affichés dans des espaces différents de l'élément utilisateur graphique.

8. Selon l'une ou l'autre des revendications précédentes, la méthode comporte les éléments suivants :
- génération d'un premier élément graphique (151 ; 161 ; 171) pour chaque option de gestion associée à la notification reçue ;
- évaluation de la sélection d'au moins un premier élément graphique (151 ; 161 ; 171) ; et
exécution d'une action en fonction des données d'activation associées au premier élément graphique sélectionné (151 ; 161 ; 171).

9. Équipement destiné à l'utilisateur (100), équipé d'une unité d'entrée (205), d'un écran (101, 204) et d'un moyen de traitement (201) configuré pour contrôler l'écran (101, 204) de sorte qu'un premier espace (140) et au moins un deuxième espace (150 ; 160 ; 170) s'affichent à l'écran (101, 204), et capable d'appliquer la méthode selon l'une ou l'autre des revendications précédentes.
